# EUROPÄISCHE PATENTANMELDUNG

(11) **EP 0 679 850 A2**
(43) Veröffentlichungstag der Anmeldung: **02.11.1995**
(21) Anmeldenummer: 95105982.3
(22) Anmeldetag: 21.04.1995
(51) Int. Cl.: F26B 25/08, C04B 33/30

(54) **Vorrichtung zum Trocknen von Ziegeln in einem Ziegelwerk**

(30) Priorität: 26.04.1994 DE 9406917 U
(71) Anmelder: Hamann, Jürgen, D-31137 Hildesheim (DE); Wienerberger Ziegelindustrie GmbH & Co., D-30650 Hannover (AT)
(72) Erfinder: Steenheuer, Clemens, D-48624 Schöppingen (DE)
(74) Vertreter: König, Norbert, Dipl.-Phys. Dr.

(57) **Zusammenfassung**

Eine Vorrichtung zum Trocknen von Ziegeln in einem Ziegelwerk weist ein Trocknergebäude mit einem Trockenraum, einem Trockenluftkanal und einem Naßluftkanal auf. Um eine einfachere und preiswertere Herstellung und effektiveren Betrieb zu erreichen, weist das Trocknergebäude (2) mehrere beabstandete Stahlrahmen (8) für die Queraussteifung auf, zwischen denen Stahlbetonfertigteilelemente (24) für die Längsaussteifung des Trocknergebäudes angeordnet sind. Das Trocknergebäude kann auch nur aus Stahlbetonfertigteilelementen für die Wände und Decken bestehen. Die Stahlbetonfertigteilelemente (24) oder die Stahlrahmen (8) sind auf einer Stahlbetonbodenplatte (6) angeordnet, die vorzugsweise in eine Wärmedämmung (4) eingebracht ist.

## Beschreibung

Die Erfindung betrifft eine Vorrichtung zum Trocknen von Ziegein in einem Ziegelwerk mit einem einen Trockenraum, einen Trockenluftkanal und einen Naßluftkanal aufweisenden Trocknergebäude.

Die Aufgabe der vorliegenden Erfindung besteht darin, eine Vorrichtung zum Trocknen von Ziegein in einem Ziegelwerk anzugeben, die einfacher und preiswerter herstellbar ist und effektiver arbeitet.

Diese Aufgabe wird durch die Erfindung gemäß Anspruch 1 gelöst.

Vorteilhafte und zweckmäßige Weiterbildungen der erfindungsgemäßen Aufgabenlösung sind in den Unteransprüchen angegeben.

Die Erfindung soll nachfolgend anhand eines in der beigefügten Zeichnung dargestellten Ausführungsbeispieles näher erläutert werden.

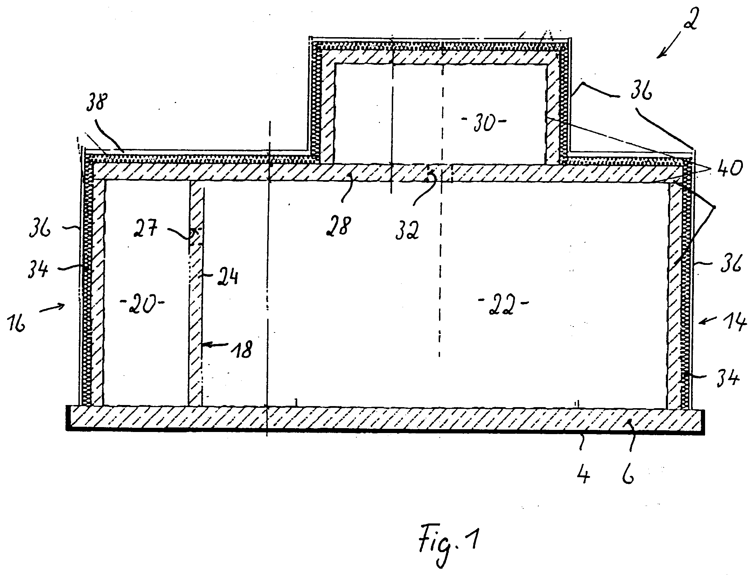

Es zeigt
- Fig. 1: einen Querschnitt durch eine erfindungsgemäße Vorrichtung zum Trocknen von Ziegeln und
- Fig. 2: einen Ausschnitt aus dem Grundriß der Vorrichtung nach Fig. 1.

Gleiche Bauteile in den Figuren der Zeichnung sind mit den gleichen Bezugszeichen versehen.

Die Zeichnung zeigt eine Vorrichtung 2 zum Trocknen von Ziegeln in einem Ziegelwerk, die als Trocknergebäude ausgebildet ist.

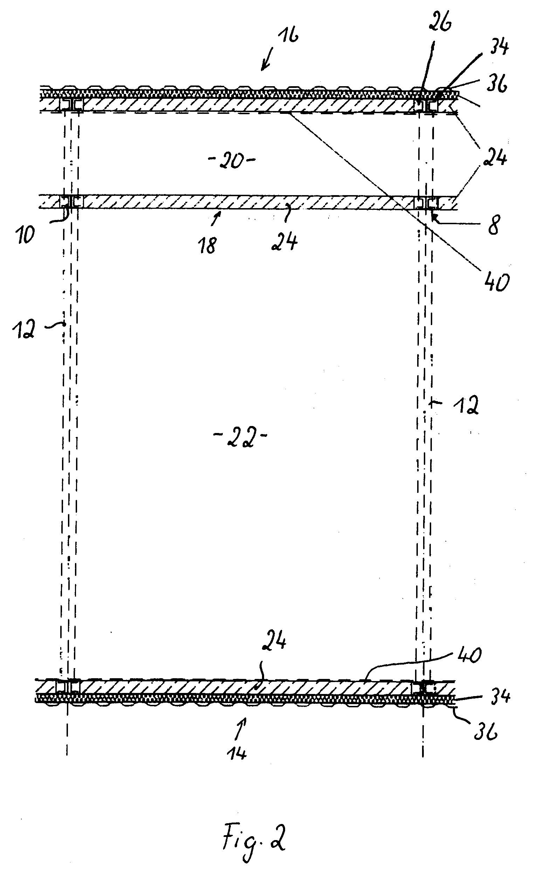

Das Trocknergebäude 2 umfaßt eine auf einem festen Unterbau angeordnete, auf einer Wärmedämmung 4 aufgebrachte Stahlbetonbodenplatte 6. Auf dieser Bodenplatte 6 sind Trocknergebäudewände aus Stahlbetonfertigteilelementen oder, wie in der Zeichnung dargestellt, in den erforderlichen Abständen Stahlrahmen 8 (vgl. Fig. 2) montiert, die der Queraussteifung des Trocknergebäudes 2 dienen. Die Stahlrahmen 8 bestehen aus aufrechten Stahlprofilen 10 und mit diesen verbundenen vorzugsweise verschweißten Stahlträgern 12 in Deckenhöhe, vgl. Fig. 2.

Zwischen den Stahlrahmen 8 sind die Trocknergebäudeaußenwände 14, 16 und eine Trennwand 18 zur Abtrennung eines Trockenluftkanals 20 vom Trockenraum 22 als Stahlbetonfertigteilelemente 24 (vgl. Fig. 2) montiert und im Bereich der Stahlrahmen mit Ortbeton 26 vergossen. Die Stahlbetonfertigteilelemente gewährleisten die Längsaussteifung des Trocknergebäudes 2. In der Trennwand 18 sind Öffnungen 27 für den Durchtritt der Trockenluft aus dem Trockenluftkanal 20 in den Trocknerraum 22 ausgebildet. Durch den Trocknerraum 22 werden die zu trocknenden Ziegel hindurchgefahren. Der Trockenluftkanal kann auch außerhalb des Trocknergebäudes oberhalb, seitlich oder unterhalb des Trocknerraumes angeordnet sein und kann außer aus Stahlbetonfertigteilelementen beispielsweise auch aus Blech ausgebildet sein.

Für die Decke 28 des Trocknergebäudes 2 werden Fertigteilplattendecken verlegt, auf die Ortbeton aufgebracht wird. Stattdessen können aber auch Vollstahlbetonfertigplatten für die Decke verlegt werden.

Das Trocknergebäude 2 umfaßt ferner oberhalb des Trocknerraumes 22 einen Naßluftkanal 30, aus dem die Naßluft nach oben abgesaugt wird. Der Naßluftkanal steht über in der Decke 28 ausgebildeten Öffnungen 32 mit dem Trokkenraum 22 in Verbindung. Der Naßluftkanal 30 besteht ebenfalls aus Stahlrahmen und Fertigteilplatten.

Auf die Außenseite des Trocknergebäudes 2 ist eine Wärmedämmschicht 34 aufgebracht, die vorzugsweise mit einer Verkleidung 36, im Deckenbereich vorzugsweise mit einer Estrichschicht 38, zum Schutz der Wärmedämmung versehen ist.

Die Innenflächen des Trocknergebäudes 2 sind mit einer Dampfsperre 40 aus einer Metallfolie oder dgl. versehen.

Die Dampfsperre und die Wärmedämmschicht können auch mit Schaumglas auf den Innenflächen des Trocknergebäudes ausgeführt sein.

Fugendichtungen (nicht dargestellt) werden mit Mörtel bzw. Injektionsschläuchen durchgeführt.

In den erforderlichen Abständen sind im Boden, in der Decke und in den Wänden Dehnungsfugen ausgebildet.

## Patentansprüche

1. Vorrichtung zum Trocknen von Ziegeln in einem Ziegelwerk mit einem einen Trockenraum, einen Trockenluftkanal und einen Naßluftkanal aufweisenden Trocknergebäude, **dadurch gekennzeichnet**, daß das Trocknergebäude (2) aus Stahlbetonfertigteilelementen (24) für die Wände und Decken besteht.

2. Vorrichtung nach Anspruch 1, **dadurch gekennzeichnet**, daß das Trocknergebäude (2) mehrere beabstandete Stahlrahmen (8) für die Queraussteifung aufweist, zwischen denen Stahlbetonfertigteilelemente (24) für die Längsaussteifung des Trocknergebäudes angeordnet sind.

3. Vorrichtung nach Anspruch 1 oder 2, **dadurch gekennzeichnet**, daß die Stahlbetonfertigteilelemente (24) oder die Stahlrahmen (8) auf einer Stahlbetonbodenplatte (6) angeordnet bzw. montiert sind.

4. Vorrichtung nach Anspruch 1 oder 2, **dadurch gekennzeichnet**, daß der mit dem Trockenraum (22) in Verbindung stehende Trockenluftkanal (20) aus Blech oder Stahlbetonfertigteilelementen besteht.

5. Vorrichtung nach Anspruch 3, **dadurch gekennzeichnet**, daß die Stahlbetonbodenplatte (6) in eine Wärmedämmung (4) eingebracht ist.

6. Vorrichtung nach Anspruch 1, 2 oder 4, **dadurch gekennzeichnet**, daß der Trockenraum (22) von dem Trockenluftkanal (20) durch eine mit Öffnungen (27) versehene Trennwand (18) aus Stahlbetonfertigteilelementen getrennt ist.

7. Vorrichtung nach Anspruch 1 oder 2, **dadurch gekennzeichnet**, daß der Naßluftkanal (30) oberhalb des Trockenraumes (22) angeordnet ist und über in der Gebäudedecke (28) ausgebildete Öffnungen (32) mit dem Trockenraum (22) in Verbindung steht.

8. Vorrichtung nach einem der vorhergehenden Ansprüche, **dadurch gekennzeichnet**, daß die Außenseite des Trocknergebäudes (2) mit einer Wärmedämmschicht (34) versehen ist.

9. Vorrichtung nach Anspruch 8, **dadurch gekennzeichnet**, daß die Wärmedämmschicht (34) mit einer Verkleidung (36) versehen ist.

10. Vorrichtung nach einem der vorhergehenden Ansprüche, **dadurch gekennzeichnet**, daß die Innenflächen des Trocknergebäudes (2) mit Dampfsperren (40) versehen sind.

11. Vorrichtung nach Anspruch 10, **dadurch gekennzeichnet**, daß die Dampfsperren (40) Metallfolien sind.

12. Vorrichtung nach einem der vorhergehenden Ansprüche, **dadurch gekennzeichnet**, daß die Dampfsperre und die Wärmedämmung mit Schaumglas auf den Innenflächen des Trocknergebäudes ausgeführt sind.
